# FASCICULE DE BREVET EUROPEEN

(11) **EP 2 670 717 B1**
(45) Date de publication et mention de la délivrance du brevet: **21.06.2017**
(21) Numéro de dépôt: 12709897.8
(22) Date de dépôt: 02.02.2012
(51) Int. Cl.: C02F 11/18, C02F 11/16, C02F 3/00, F26B 17/20

(54) **PROCÉDÉ ET INSTALLATION DE TRAITEMENT D'HYGIÉNISATION DE BOUES**
VERFAHREN UND ANLAGE ZUR SCHLAMMHYGIENISIERUNG
PROCESS AND PLANT FOR SLUDGE HYGIENIZATION

(30) Priorité: 04.02.2011 FR 1100351
(43) Date de publication de la demande: 11.12.2013
(73) Titulaire: Aqualter Développement, 28000 Chartres (FR)
(72) Inventeur: DARCEL, Loïc, F-78000 Versailles (FR); BERNAT, Olivier, F-28600 Luisant (FR)
(74) Mandataire: IP Trust
(86) Numéro de dépôt international: PCT/FR2012/000045
(87) Numéro de publication internationale: WO 2012/104509

(56) Documents cités:
- EP-A1- 0 559 012
- DE-A1-102009 033 028
- DE-U1-202009 004 860
- US-A- 4 734 998
- US-A1- 2002 043 505
- "Evaluation sludge treatments for pathogen reduction", Europ. Commission, DG Environment , septembre 2001 (2001-09), pages 1-52, XP002659059, ISBN: 928941734X Extrait de l'Internet: URL:http://ec.europa.eu/environment/waste/ sludge/pdf/sludge_eval.pdf [extrait le 2011-09-15]

## Description

L'invention se rapporte à une installation de traitement de boues, notamment pour l'hygiénisation de celles-ci.

Beaucoup d'opérations industrielles ou urbaines génèrent des déchets qu'il s'agit de soumettre à des traitements variés de finalités diverses. On peut citer comme exemple les déchets provenant de stations d'épuration d'eaux résiduaires industrielles ou urbaines ou d'usines de traitement d'eau potable. Ces déchets comprennent notamment des masses formées par des boues biologiques et physico-chimiques.

Il s'agit de soumettre ce type de déchets à des traitements plus ou moins complexes, de finalité économique et/ou écologique. De plus, certaines législations fixent des normes précises et impératives pour le traitement desdits déchets.

Tout ceci fait que le traitement de déchets est aujourd'hui à la fois répandu et diversifié.

La partie « boues » des déchets est un secteur sensible parmi les déchets à traiter. Ainsi, le traitement des boues en vue de leur valorisation comprend classiquement l'épaississement, la déshydratation et le cas échéant le séchage sur certaines installations.

Le séchage de boues apparaît comme une étape importante puisqu'elle permet notamment de réduire considérablement les volumes des boues. Un faible volume est important au niveau du stockage, du transport et/ou de l'évacuation.

Il faut comprendre qu'on entend par « boues séchées » des boues dont le taux d'humidité ne dépasse pas environ 30%. En effet, il est important d'obtenir un produit de boues compact dont la structure intégrale n'est pas détériorée et garde un aspect granulaire. Un reste d'humidité est donc opportun. En effet, un produit de boues trop sec risque de contenir une grande quantité de matières poussiéreuses. Toute forme de poussière est généralement inadaptée pour le transport, le stockage ou la revalorisation.

On connait notamment des installations dites à séchage thermique, lesquelles mettent en oeuvre une opération de séchage par air dans un circuit fermé comprenant une évacuation pour l'humidité. On connait également des installations à séchage solaire qui présentent un avantage au niveau des coûts d'investissement et d'exploitation qui sont nettement plus attractifs que ceux du séchage thermique.

Afin d'optimiser la mise en oeuvre ou encore en vue d'économiser de l'énergie, l'état de la technique propose différentes installations et/ou procédés de séchage.

Le document WO 2004/020922 A1 décrit un dispositif de séchage avec retournement de boues. Afin d'éviter une ventilation forcée et positionnée en toiture de la serre, le dispositif comprend des ventilateurs entraînés sur un châssis qui sont directement positionnés sur des moyens assurant le retournement de boues. Les ventilateurs assurent le renouvellement de l'air contenu dans la serre.

Le document EP 0 413 940 A décrit une installation comprenant un dispositif de pressage pour essorer des boues et ainsi améliorer le séchage.

Mais les boues traitées par les installations de l'état de la technique ne sont pas directement compatibles avec un usage dans des domaines techniques sensibles en termes de qualité sanitaire.

D'autres domaines, comme le domaine agricole, nécessitent un plan d'épandage strict pour pouvoir valoriser les boues issues d'installations de séchage. En effet, les boues issues d'installations de séchage et utilisées dans le domaine agricole sont traitées en tant que « déchets ». Il faut donc prévoir une procédure de gestion de risque visant à ce que la capacité d'un système à s'auto-épurer ne soit pas dépassée. Cette procédure de gestion est parfois complexe à mettre en oeuvre.

Pour éviter les plans d'épandage il faut contrôler en amont la quantité d'organismes uni- ou pluricellulaires présents dans les boues. Il faut notamment contrôler les quantités d'agents pathogènes, de bactéries, de levures, de champignons y compris les moisissures, d'organismes pluricellulaires et oeufs de ceux-ci.

C'est pour cela que certaines boues subissent un traitement dit d'hygiénisation afin d'étendre leur champ d'application après simple séchage. Cette hygiénisation à lieu après séchage dans des installations distinctes. Le but étant de fournir au final des boues dites homologuées en tant que matière fertilisante. Ces boues homologuées sont prêtes à être employées dans des domaines techniques sensibles ou dans le domaine agricole, sans pour autant prévoir de plan d'épandage strict.

Le domaine agricole connaît le problème des agents pathogènes. Les agents les plus répandus et difficile à éliminer sont :
- les bactéries de famille *Enterobacteriaceae* comme par exemple *Escherichia coli* ou le genre *Salmonella ;*
- les bactéries de famille *Clostridiaceae* comme par exemple *Clostridium perfrigens ;*
- les bactéries de famille *Enterococcaceae* comme par exemple *Enterococcus faecalis ;*
- les bactéries de famille *Staphylococcaceae* comme par exemple *Staphylococcus aureus ;*
- les bactéries de famille *Listeriaceae* comme par exemple *Listeria monocytogenes ;*
- les oeufs de nématozoaires (ou *Nematoidea*) ; ou
- les virus du genre *Enterovirus.*

Pour éliminer ces agents pathogènes des boues séchées, l'état de la technique prévoit des procédés généralement difficiles à mettre en oeuvre et/ou qui impliquent des coûts d'investissement et de traitement élevés.

Le document EP 1 621 523 divulgue un procédé à chauffage statique et thermique à haute température. Le document mentionne par ailleurs une hygiénisation des boues à 50°C pendant 1 mois.

Le document FR 2 904 824 décrit une hygiénisation par traitement micro-ondes.

Il faut noter que le bilan énergétique augmente avec la complexité du processus mis en oeuvre. Il est donc important de trouver un équilibre entre une mise en oeuvre la plus simple possible et un bilan énergétique satisfaisant, tout en tenant compte des réglementations sanitaires imposées.

De plus, les techniques de l'art antérieur ne permettent pas une élimination satisfaisante des bactéries de la famille des Clostrïdiaceae.

Le document « Evaluation sludge treatments for pathogen reduction », Europ. Commission, DG Environement, sept 2001, pages 1-52, décrit une hygiénisation des boues par agent alcalin à température supérieure à 55°C pendant au moins deux heures. Dans ce cas la complexité du procédé proposé repose sur l'étape d'ajout de l'agent alcalin, son stockage sur site et la protection des opérateurs le manipulant.

La présente invention vient améliorer la situation. L'invention est définie par les revendications annexées.

À cet effet, l'invention vient introduire une installation de traitement de boues, comprenant un plancher allongé possédant une surface de travail pour recevoir une masse de boues étalées, un chariot mobile disposé transversalement au-dessus de la surface de travail et comprenant un système d'entraînement pour un déplacement du chariot mobile en translation longitudinale au dessus du plancher, ledit chariot mobile comprenant un outil de déplacement conçu pour emporter continuellement lesdites boues vers une partie terminale de ladite surface de travail, un outil de prélèvement de boues disposé en partie terminale de ladite surface de travail, pour transférer les boues vers une voie de sortie. La voie de sortie de l'installation de l'invention comprend une vis de convoyage disposée en interaction avec l'outil de prélèvement, ladite vis étant munie d'un moyen de chauffage, et associée à un système d'entraînement en

rotation. La voie de sortie de l'installation de l'invention comprend également un contrôleur agencé conjointement pour régler le chauffage dans la vis pour obtenir une température des boues comprise entre 90°C et 100°C, tout en réglant l'entraînement en rotation de la vis pour obtenir un temps de séjour des boues au sein de cette vis sensiblement à une valeur prédéterminée supérieure à 4 heures.

Selon un mode de réalisation, la vis de convoyage est une vis de type sans âme.

Selon un mode de réalisation, le moyen de chauffage peut comprendre la circulation d'un fluide caloporteur au sein de la vis. Dans un autre mode de réalisation, la vis est munie de résistances chauffantes. Avantageusement, la vis est réalisée en un matériau conducteur. De manière générale, les moyens de chauffage connu dans l'art peuvent être intégrés pour coopérer avec la vis de convoyage.

Selon un mode de réalisation, ladite vis de convoyage possède une longueur d'environ 6000 mm et un diamètre compris entre 300 mm et 600 mm. Ladite vis de convoyage peut comprendre une spire hélicoïdale et comprendre des palettes de brassage.

Selon un mode de réalisation, le contrôleur est agencé pour régler la température des boues dans la vis sensiblement à une valeur prédéterminée de 95°C. Le contrôleur peut régler la température de la vis sensiblement à une valeur prédéterminée de 105°C.

La vis de convoyage peut être logée dans un boîtier comprenant au moins une sonde thermique.

Dans un mode de réalisation le contrôleur est agencé pour commander une vitesse de rotation comprise entre 0,12 et 0,26 tour/minute.

La vis de convoyage peut être entraînée en rotation par un moteur d'entraînement.

L'invention vise également un procédé de traitement de boues comprenant les étapes suivantes :
a. recevoir sur une surface de travail d'un plancher une masse de boues étalées,
b. déplacer en translation longitudinale un chariot mobile disposé transversalement au-dessus de la surface de travail et transporter lesdites boues vers une partie terminale de ladite surface de travail,
c. prélever les boues en partie terminale de la surface de travail et les transférer vers une vis de convoyage munie d'un moyen de chauffage,
d. régler le chauffage dans la vis pour obtenir une température des boues comprise entre 90°C et 100°C, et
e. régler l'entraînement de la vis pour obtenir un temps de séjour des boues au sein de cette vis sensiblement d'une valeur prédéterminée supérieure à 4 heures.

À l'étape d. la température de la vis est de préférence réglée pour obtenir une température des boues de 95°C. Pour cela la température de la vis peut être réglée à 105°C.

L'entraînement de la vis peut être réglé à une vitesse de rotation comprise entre 0,12 et 0,26 tour/minute de sorte à obtenir un temps de séjour des boues au sein de cette vis sensiblement à une valeur prédéterminée comprise entre 5 et 8 heures, préférentiellement de 6 heures.

Le procédé de l'invention peut comprend avantageusement une étape de brassage des boues. Ce brassage est réalisé en continu durant le temps de séjour des boues au sein de ladite vis.

D'autres avantages et caractéristiques de l'invention apparaîtront à la lecture de la description détaillée ci-après et sur le dessin annexé sur lequel :

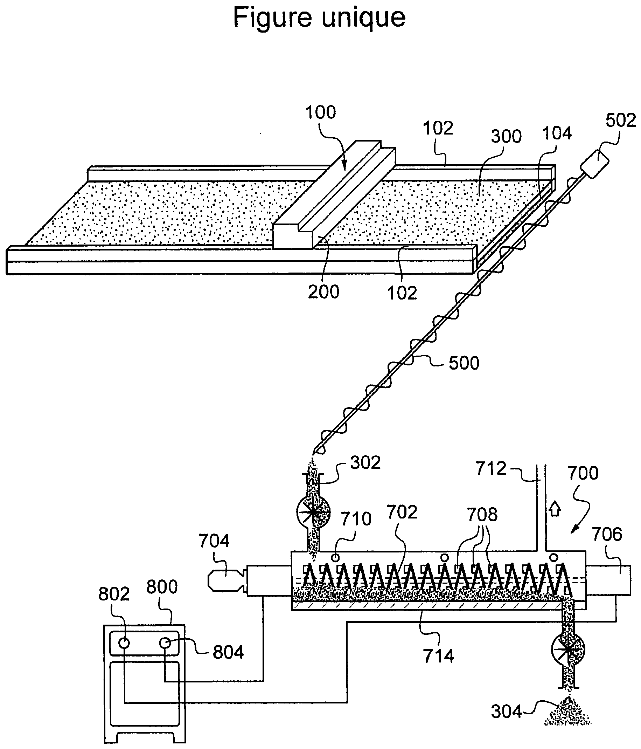

- la figure 1 représente un schéma général d'une installation de traitement d'hygiénisation de boues selon un mode de réalisation de l'invention.

Le dessin et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

La figure 1 représente une installation de traitement de boues comprenant un système d'hygiénisation de boues.

L'installation comprend un plancher 104 possédant une surface de travail pour recevoir une masse de boues 300 étalée. Par surface de travail il faut comprendre sensiblement la partie du plancher 104 formant un lit de boues 300. Il s'agit essentiellement d'une surface plane généralement rectangulaire agencée pour recevoir les boues 300 en vue d'un séchage. Les boues 300 peuvent être apportée par une vis d'alimentation disposée en voie d'arrivée.

Des rails de guidage 102 sont disposés sensiblement le long du plancher 104, à savoir parallèlement à celui-ci et parallèlement entre eux. D'un autre point de vue, les rails de guidage 102 sont disposés longitudinalement de part et d'autre de la surface de travail.

Un système d'entraînement peut être disposé le long des rails de guidage 102 pour déplacer un chariot mobile 100 au dessus de la surface de travail. Le chariot mobile 100 est disposé transversalement au-dessus de ladite surface de travail et est agencé pour réaliser une translation longitudinale au-dessus du plancher 104 en prenant appui sur les rails de guidage 102.

Le chariot mobile 100 porte un outil de déplacement 200. L'outil de déplacement 200 peut être de type outil à retournement comprenant des aubes. Cet outil à une fonction principale double : le séchage des boues et le déplacement des boues vers une partie terminale de la surface de travail du plancher 104.

L'outil de déplacement 200 est positionné transversalement par rapport à la surface de travail du plancher 104 et déplace de manière continue les boues 300 vers une partie terminale de la surface de travail du plancher 104, tout en les séchant.

L'outil de déplacement 200 est agencé de manière à être au contact de la masse de boues 300 située sur la surface de travail. Plus précisément, l'outil de déplacement 200 est au quasi-contact du plancher afin d'assurer au mieux une fonction de déplacement de boues. Toutefois, il faut prévoir un espace de sécurité entre l'outil de déplacement 200 et le plancher 104 afin d'éviter un accrochage.

Comme mentionné plus haut, l'outil de déplacement 200 est porté par le chariot 100 qui se déplace ensemble avec l'outil 200 en translation longitudinale au-dessus du plancher 104. Ainsi, la masse de boues 300 se trouvant sur la surface de travail est sollicitée sur toute la longueur du plancher 104 par l'outil de déplacement 200. Une direction de travail est prédéterminée à partir d'une voie d'arrivée vers une voie de sortie. L'outil de déplacement assure la fonction de déplacer les boues 300 continuellement de la voie d'arrivée vers une partie terminale de la surface de travail du plancher 104.

Le plancher 104 peut être de nature plus ou moins sophistiquée et peut notamment être de type plancher-chauffant.

Selon une variante de l'invention, le plancher comprend un système de chauffage avec recyclage de chaleur à partir des effluents de sortie de la station d'épuration.

Les boues 300 qui quittent la surface de travail sont des boues que l'on peut qualifier de séchées, à savoir ayant un taux d'humidité qui ne dépasse pas environ 30% et avantageusement 20%.

Le dispositif de l'invention comprend également un outil de prélèvement 500 disposé au voisinage de la partie terminale de ladite surface de travail.

Selon un mode de réalisation, l'outil de prélèvement 500 peut être une vis entraînée en rotation par un moteur d'entraînement 502.

L'outil de prélèvement 500 est agencé pour transférer les boues 300 à partir de la partie terminale de la surface de travail vers une voie de sortie.

Selon l'invention, la voie de sortie comprend une vis de convoyage 700. Plus précisément, la vis de convoyage 700 est disposée en interaction avec l'outil de prélèvement 500 pour recevoir les boues séchées provenant de la surface de travail.

La vis de convoyage 700 est de préférence une vis de type vis sans âme (également appelé vis sans arbre) pour favoriser le transport (convoyage) du produit sollicité par ladite vis. Ce type de vis est constitué d'une spire 702 continue hélicoïdale.

Ladite vis de convoyage 700 est munie d'un moyen de chauffage 706. Selon un mode de réalisation, la spire 702 est réalisée en un matériau conducteur, par exemple en inox et de préférence en inox-304. Ainsi, une chaleur peut être appliquée à un endroit choisi à ladite spire 702 pour chauffer celle-ci.

Selon l'invention la vis de convoyage 700 est agencée pour être portée à une température prédéterminée comprise entre 90°C et 110°C, de préférence à 105°C. En effet, il est prévu de porter les boues 300 à une température sensiblement comprise entre 90°C et 100°C. Ceci est réalisé par conduction thermique et transfert de chaleur de la vis de convoyage 700 vers les boues 300. Autrement dit, il est prévu de régler le chauffage dans la vis pour obtenir une température des boues comprise entre 90°C et 100°C.

Préférentiellement les boues sont portées à une température de 95°C. Dans ce mode de réalisation préférentiel, la vis 700 est réglée à une température sensiblement égale à 105°C.

Avantageusement, la vis de convoyage 700 est logée dans un boitier 714 pour la bonne isolation thermique et afin d'assurer un transfert de chaleur de la vis 700 vers les boues 300 le plus sensible.

L'isolation dans un boitier 714 permet d'améliorer le transfert de chaleur entre la vis de convoyage 700 et les boues. Ainsi, avec une bonne isolation il n'existe quasiment pas de pertes en termes de transfert de chaleur. En conséquence, lorsque la vis de convoyage 700 est portée à une température comprise entre 90°C et 100°C, les boues le sont également.

Le boitier 714 peut comprendre une ou plusieurs sondes de température 710 pour contrôler la température ambiante des boues 300 et le cas échéant pour ajuster la température de la vis de convoyage 700. De préférence, une ou plusieurs sondes sont prévues afin de capter la température des boues à différents emplacements sur leur chemin de convoyage.

Selon l'invention la vis de convoyage 700 est entraînée par un système d'entraînement en rotation 704. Il peut notamment s'agir d'un moteur d'entraînement.

L'installation de l'invention comprend en outre un contrôleur 800 agencé conjointement pour régler la température des boues dans la vis sensiblement à une valeur prédéterminée comprise entre 90°C et 100°C, préférentiellement à 95°C tout en réglant l'entraînement en rotation de la vis pour obtenir un temps de séjour des boues au sein de cette vis sensiblement à une valeur prédéterminée supérieure à 4 heures, et préférentiellement compris entre 5 et 8 heures.

Un régulateur de température 802 permet de régler et/ou d'ajuster la température de la vis de convoyage 700. Le régulateur de température 802 est relié au moyen de chauffage 706.

Selon un mode de réalisation, le boitier 714 comprend un thermostat en relation avec la ou les sondes de température. Ceci permet de vérifier en temps réel la température des boues et de d'ajuster la température de la vis de convoyage 700 si nécessaire.

Un contrôleur de vitesse de rotation 804 permet de régler et/ou d'ajuster la vitesse de rotation (tours/minutes) de la vis de convoyage 700. Le contrôleur de vitesse de rotation 804 est relié au système d'entraînement en rotation 704.

Selon un mode de réalisation, la spire 702 peut être munie de palettes de brassage 708. Les palettes de brassage 708 sont disposées sur la spire 702 pour notamment réaliser un brassage des boues et augmenter le coefficient de transfert thermique entre vis 700 et les boues et d'assurer en plus un traitement homogène des boues.

La Demanderesse a découvert que le brassage des boues en combinaison avec un chauffage de celles-ci permet d'obtenir une bonne hygiénisation desdites boues.

Ainsi le procédé de traitement de boues selon l'invention peut comprendre en outre une étape de brassage desdites boues, cette étape étant active durant ledit temps de séjour des boues au sein de ladite vis.

Pour évacuer les gaz s'accumulant dans le boitier 714, une évacuation à gaz 712 est prévue. Les gaz peuvent être aspirés et dirigés vers une installation de désodorisation.

La figure 1 montre de manière schématique l'acheminement continu des boues 300. Les boues 300 brutes et humides sont apportées sur la surface de travail du plancher 104. Lorsque les boues 300 sont séchées, à savoir lorsqu'elles ont atteint taux d'humidité ne dépassant pas 30%, elles sont prélevées par l'outil de prélèvement 500. Les boues séchées 302 sont ensuite soumis à une hygiénisation par la vis de convoyage 700. En sortie de la vis de convoyage 700, les boues peuvent être qualifiées de boues hygiénisées 304.

La Demanderesse a découverte non sans surprise que l'application d'une température prédéterminée aux boues avec la vis de convoyage 700, et ce pendant une durée sensiblement comprise entre 4 heures et 10 heures, permet d'éliminer les agents pathogènes, les bactéries, les levures, les champignons y compris les moisissures, les organismes pluricellulaires et oeufs de ceux-ci desdites boues. Ainsi, le dispositif de l'invention et son procédé d'utilisation permettent une hygiénisation efficace des boues issues notamment de stations d'épuration.

Le tableau I montre les analyses microbiologiques de boues séchées respectivement avant et après hygiénisation avec la présente invention. Le tableau indique la comparaison avec une norme française en vigueur pour l'homologation des matières fertilisantes (pour d'amples informations le lecteur est invité à se référer au formulaire CERFA N° 50644#01).

**Tableau I**

| | **Boue avant traitement** | **Boue après traitement** |
|---|---|---|
| **Micro-organismes pathogènes pour l'homme et les animaux** | | |
| | | |
| Escherichia coli [par 1g de Matière Brute] | 6,90E+04 | <100 |
| Clostridium Perfringens [par 1g de Matière Brute] | 2,60E+06 | <10 |
| Entérocoques [par 1g de Matière Brute] | 5,50E+04 | <23 |
| Staphylocoques coagulase [par 1g de | Variable | <10 |
| Matière Brute] | | |
| Listeria monocytogènes [par 25g de Matière Brute] | Variable | Absence |
| Nématodes (oeufs) [par 25g de Matière Brute] | Variable | Absence |
| Nématodes (larves) [par 25g de Matière Brute] | Variable | Absence |
| Salmonella [par 25g de Matière Brute] | Présence | Absence |
| Levures et moisissures *avec confirmation d'Aspergillus* [par 1g de Matière Brute] | Variable | Environ 10 |
| Aspergillus [par 1g de Matière Brute] | Variable | < 10 |

Le tableau montre que les boues après traitement peuvent être caractérisées d'hygiénisées. Les boues sont notamment conformes aux critères d'Homologation tels que définies par le formulaire CERFA N° 50644#01.

## Revendications

1. Installation de traitement de boues comprenant un système d'hygiénisation de boues, comprenant :
- un plancher allongé possédant une surface de travail pour recevoir une masse de boues étalées (300),
- un chariot mobile (100) disposé transversalement au-dessus de la surface de travail et comprenant un système d'entraînement pour un déplacement du chariot mobile en translation longitudinale au dessus du plancher, ledit chariot mobile comprenant un outil de déplacement conçu pour emporter continuellement lesdites boues vers une partie terminale de ladite surface de travail,
- un outil de prélèvement de boues (500, 502) disposé en partie terminale de ladite surface de travail, pour transférer les boues vers une voie de sortie,
**caractérisée en ce que** la voie de sortie comprend une vis de convoyage (700) disposée en interaction avec l'outil de prélèvement (500, 502), ladite vis étant munie d'un moyen de chauffage (706) notamment de type à comprendre la circulation d'un fluide caloporteur ou de type à comprendre au moins une résistance chauffante, et associée à un système d'entraînement en rotation, et un contrôleur (800) agencé conjointement pour régler le chauffage dans la vis pour obtenir une température des boues comprise entre 90°C et 100°C, tout en réglant l'entraînement en rotation de la vis pour obtenir un temps de séjour des boues au sein de cette vis sensiblement à une valeur prédéterminée supérieure à 4 heures, la vis de convoyage comprenant des palettes de brassage (708).

2. Installation de traitement de boues selon la revendication 1, dans laquelle ladite vis de convoyage est une vis de type sans âme (700).

3. Installation de traitement de boues selon l'une des revendications précédentes, dans laquelle ladite vis de convoyage comprend une spire hélicoïdale (702).

4. Installation de traitement de boues selon l'une des revendications précédentes, dans laquelle le contrôleur (800) est agencé pour régler la température des boues dans la vis sensiblement à une valeur prédéterminée de 95°C.

5. Installation de traitement de boues selon l'une des revendications précédentes, dans laquelle le contrôleur (800) est agencé pour régler la température de la vis sensiblement à une valeur prédéterminée de 105°C.

6. Installation de traitement de boues selon l'une des revendications précédentes, dans laquelle ladite vis de convoyage (700) est logée dans un boîtier (714) comprenant au moins une sonde thermique.

7. Installation de traitement de boues selon l'une des revendications précédentes, dans laquelle le contrôleur (800) est agencé pour commander une vitesse de rotation comprise entre 0,12 et 0,26 tour/minute.

8. Installation de traitement de boues selon l'une des revendications précédentes, dans laquelle ladite vis de convoyage (700) est entraînée en rotation par un moteur d'entraînement.

9. Procédé de traitement et d'hygiénisation de boues comprenant les étapes suivantes :
a. recevoir sur une surface de travail d'un plancher une masse de boues étalées (300),
b. déplacer en translation longitudinale un chariot mobile (100) disposé transversalement au-dessus de la surface de travail et transporter lesdites boues vers une partie terminale de ladite surface de travail,
c. prélever les boues en partie terminale de la surface de travail et les transférer vers une vis de convoyage (700) munie d'un moyen de chauffage notamment de type à comprendre la circulation d'un fluide caloporteur ou de type à comprendre au moins une résistance chauffante,
d. régler le chauffage dans la vis (700) pour obtenir une température des boues comprise entre 90°C et 100°C, et
e. régler l'entraînement de la vis (700) pour obtenir un temps de séjour des boues au sein de cette vis sensiblement d'une valeur prédéterminée supérieure à 4 heures,
et comprenant en outre une étape de brassage desdites boues, active durant ledit temps de séjour des boues au sein de ladite vis (700), ladite vis étant pourvue de palettes de brassage (708).

10. Procédé de traitement de boues selon la revendication 9, dans lequel à l'étape d. la température de la vis (700) est réglée pour obtenir une température des boues de 95°C.

11. Procédé de traitement de boues selon la revendication 9 ou 10, dans lequel à l'étape d. la température de la vis (700) est réglée à 105°C.

12. Procédé de traitement de boues selon l'une des revendications 9 à 11, dans lequel l'entraînement de la vis (700) est réglé à une vitesse de rotation comprise entre 0,12 et 0,26 tour/minute.

13. Procédé de traitement de boues selon l'une des revendications 9 à 12, dans lequel l'entraînement de la vis (700) est réglé pour obtenir un temps de séjour des boues au sein de cette vis sensiblement à une valeur prédéterminée comprise entre 5 et 8 heures, préférentiellement de 6 heures.

## Patentansprüche

1. Schlammbehandlungsanlage, welche ein System zur Hygienisierung von Schlamm enthält und folgendes umfasst:
- einen länglichen Boden mit einer Arbeitsfläche zur Aufnahme einer verteilten Schlammmasse (300),
- einen beweglichen Schlitten (100), der quer über der Arbeitsfläche angeordnet ist und ein Antriebssystem zum Verschieben des beweglichen Schlittens in Längsrichtung oberhalb des Bodens aufweist, wobei besagter beweglicher Schlitten ein Fortbewegungsinstrument enthält, das so konzipiert ist, dass besagter Schlamm kontinuierlich zu einem Endbereich der Arbeitsfläche mitgeführt wird,
- ein Schlammentnahmeinstrument (500, 502), das im Endbereich besagter Arbeitsfläche angeordnet ist, um den Schlamm zu einem Ausgangskanal zu befördern,
**dadurch gekennzeichnet, dass** der Ausgangskanal eine Förderschnecke (700) umfasst, welche in Wechselwirkung mit dem Entnahmeinstrument (500, 502) angeordnet ist, wobei besagte Schnecke mit einem Heizmittel (706) versehen ist, welches insbesondere dergestalt ist, dass darin der Umlauf einer Wärmeübertragungsflüssigkeit enthalten ist oder so, dass mindestens ein Heizwiderstand enthalten ist, und welche mit einem Drehantriebssystem verbunden ist, sowie einen damit verbunden angeordneten Controller (800) zur schnellen Regulierung des Heizvorgangs, um eine Schlammtemperatur zwischen 90°C und 100°C zu erzielen, und zur gleichzeitigen Regulierung des Drehantriebs der Schnecke, um für die Verweildauer des Schlamms in dieser Schnecke einen vorab festgelegten Wert von über 4 Stunden zu erzielen, wobei die Förderschnecke ein Rührwerk (708) enthält.

2. Schlammbehandlungsanlage nach Anspruch 1, in welcher besagte Förderschnecke eine Hohlschnecke (700) ist.

3. Schlammbehandlungsanlage nach einem der vorhergehenden Ansprüche, in welcher besagte Förderschnecke eine Spiralwindung (702) enthält.

4. Schlammbehandlungsanlage nach einem der vorhergehenden Ansprüche, in welcher der Controller (800) so angeordnet ist, dass er die Temperatur des Schlamms in der Schnecke im Wesentlichen auf einen vorab festgelegten Wert von 95°C einstellt.

5. Schlammbehandlungsanlage nach einem der vorhergehenden Ansprüche, in welcher der Controller (800) so angeordnet ist, dass er die Temperatur des Schlamms in der Schnecke im Wesentlichen auf einen vorab festgelegten Wert von 105°C einstellt.

6. Schlammbehandlungsanlage nach einem der vorhergehenden Ansprüche, in welcher die besagte Förderschnecke (700) in einem Kasten (714) liegt, welcher mindestens eine Wärmesonde umfasst.

7. Schlammbehandlungsanlage nach einem der vorhergehenden Ansprüche, in welcher der Controller (800) so angeordnet ist, dass eine Drehgeschwindigkeit zwischen 0,12 und 0,26 Umdrehungen/Minute eingestellt werden kann.

8. Schlammbehandlungsanlage nach einem der vorhergehenden Ansprüche, in der die Förderschnecke (700) durch einen Antriebsmotor drehend angetrieben wird.

9. Verfahren zur Schlammbehandlung und - hygienisierung, welches folgende Schritte umfasst:
a. die Aufnahme einer verteilten Schlammmasse (300) auf der Arbeitsfläche eines Bodens,
b. die Verschiebung eines quer über der Arbeitsfläche angeordneten beweglichen Schlittens (100) in Längsrichtung, und die Beförderung besagten Schlamms zu einem Endbereich der Arbeitsfläche,
c. die Entnahme des Schlamms im Endbereich der Arbeitsfläche und dessen Beförderung zu einer Förderschnecke (700), die mit einem Heizmittel versehen ist, dass insbesondere dergestalt ist, dass es den Umlauf einer Wärmeübertragungsflüssigkeit umfasst, oder dergestalt ist, dass es mindestens einen Heizwiderstand umfasst,
d. die Regulierung der Erhitzung in der Schnecke (700) zur Erzielung einer Schlammtemperatur zwischen 90°C und 100°C, und
e. die Regulierung des Antriebs der Schnecke (700) zur Erzielung einer Verweildauer des Schlamms in dieser Schnecke, die im Wesentlichen einen vorab festgelegten Wert von über 4 Stunden hat,
und das des Weiteren einen Schritt der Vermischung des Schlamms umfasst, der während der Verweildauer des Schlamms in der Schnecke (700) erfolgt, wobei besagte Schnecke mit Rührschaufeln (708) versehen ist.

10. Schlammbehandlungsverfahren nach Anspruch 9, in dem die Temperatur der Schnecke (700) in Schritt d. so geregelt wird, dass eine Schlammtemperatur von 95°C erzielt wird.

11. Schlammbehandlungsverfahren nach Anspruch 9 oder 10, in dem die Temperatur der Schnecke (700) in Schritt d. so geregelt wird, dass eine Schlammtemperatur von 105°C erzielt wird.

12. Schlammbehandlungsverfahren nach einem der Ansprüche 9 bis 11, in dem der Antrieb der Schnecke (700) auf eine Drehgeschwindigkeit zwischen 0,12 und 0,26 Umdrehungen/Minute eingestellt wird.

13. Schlammbehandlungsverfahren nach einem der Ansprüche 9 bis 12, in dem der Antrieb der Schnecke (700) so eingestellt wird, das für die Verweildauer des Schlamms in dieser Schnecke ein vorab festgelegter Wert von 5 bis 8 Stunden, vorzugsweise 6 Stunden erzielt wird.

## Claims

1. A sludge treatment plant comprising a sludge hygienization system, comprising:
- an extended floor with a work surface for receiving a mass of spread-out sludge (300),
- a movable carriage (100) positioned transversely on top of the work surface and comprising a drive system for moving the movable carriage in a longitudinal translation above the floor, with said movable carriage comprising a displacement tool so designed as to continuously convey said sludge towards an end part of said work surface,
- a sludge collecting tool (500, 502) provided at the end part of said work surface, for transferring the sludge towards an outlet channel,
**characterized in that** the outlet channel comprises a screw conveyor (700) provided to interact with the sludge collecting tool (500, 502), with said screw being provided with heating means (706) specifically of a type including the circulation of a heat-transfer fluid or of a type including at least one heating resistance, and associated with a rotational drive system, and a controller (800) jointly so arranged as to adjust the temperature in the screw conveyor so as to obtain a sludge temperature between 90°C and 100°C, while adjusting the rotational drive of the screw conveyor so as to obtain a residence time of the sludge within the screw conveyor substantially of a predetermined value above 4 hours, with the screw conveyor comprising stirring paddles (708).

2. A sludge treatment plant according to claim 1, wherein said screw conveyor is a coreless type of screw (700).

3. A sludge treatment plant according to one of the preceding claims, wherein said screw conveyor comprises a helical turn (702).

4. A sludge treatment plant according to one of the preceding claims, wherein the controller (800) is so arranged as to adjust the temperature of the sludge in the screw conveyor substantially at a predetermined value of 95°C.

5. A sludge treatment plant according to one of the preceding claims, wherein the controller (800) is so arranged as to adjust the temperature of the screw conveyor substantially at a predetermined value of 105°C.

6. A sludge treatment plant according to one of the preceding claims, wherein said screw conveyor (700) is accommodated in a box (714) comprising at least one temperature probe.

7. A sludge treatment plant according to one of the preceding claims, wherein the controller (800) is so arranged as to control a rotation speed ranging from 0.12 to 0.26rpm.

8. A sludge treatment plant according to one of the preceding claims, wherein said screw conveyor (700) is driven into rotation by a drive motor.

9. A sludge hygienization and treatment method comprising the following steps:
a. receiving, on a work surface of a floor, a mass of spread-out sludge,
b. moving, in longitudinal translation, a movable carriage (100) positioned transversely above the work surface and conveying said sludge to an end part of said work surface,
c. collecting the sludge at the end part of the work surface and transferring same to a screw conveyor (700) provided with heating means specifically of a type including the circulation of a heat-transfer fluid or of a type including at least one heating resistance,
d. adjusting the heating in the screw conveyor (700) so as to obtain a temperature of the sludge between 90°C and 100°C, and
e. adjusting the screw conveyor (700) drive so as to obtain a residence time of the sludge within the screw conveyor substantially of a predetermined value above 4 hours,
and further comprising a step of stirring said sludge, which remains active during the residence time of the sludge within the screw conveyor (700), with said screw conveyor being provided with stirring paddles (708).

10. A sludge treatment method according to claim 9, wherein, in step d., the temperature of the screw conveyor (700) is so adjusted as to obtain a temperature of the sludge of 95°C.

11. A sludge treatment method according to one of claims 9 or 10, wherein, in step d., the temperature of the screw conveyor (700) is set to 105°C.

12. A sludge treatment method according to one of claims 9 to 11, wherein the driving of the screw conveyor (700) is set to a rotational speed ranging from 0.12 to 0.26rpm.

13. A sludge treatment method according to one of claims 9 to 12, wherein the driving of the screw conveyor (700) is so adjusted as to obtain a residence time of the sludge within the screw conveyor substantially at a predetermined value between 5 and 8 hours, preferably 6 hours.
